# EUROPEAN PATENT APPLICATION

(11) **EP 4 618 614 A1**
(43) Date of publication of application: **17.09.2025**
(21) Application number: 23887777.3
(22) Date of filing: 26.10.2023
(51) Int. Cl.: H04W 28/02

(54) **AUXILIARY-INFORMATION SENDING METHOD, AUXILIARY-INFORMATION RECEIVING METHOD, DEVICE AND READABLE STORAGE MEDIUM**

(30) Priority: 10.11.2022 CN 202211407131
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Shieldmark
(86) International application number: PCT/CN2023/126681
(87) International publication number: WO 2024/099086

(57) **Abstract**

Disclosed are a method for transmitting assistance information, a method for receiving assistance information, a device, and a readable storage medium, which belong to the technical field of communication. The method includes: transmitting, by a terminal, assistance information to a network device, and executing, by the network device, a processing operation according to the assistance information. The assistance information includes at least one of the following: user QoE information; user satisfied rate information; a data rate; a data error rate; packet loss information; delay statistic information of a data packet; congestion information; buffer occupancy information of an uplink transmission end; buffer data information of a downlink reception end; and display buffer data information of the terminal.

## Description

### CROSS-REFERENCE TO RELATED APPLICATIONS

The disclosure claims the priority to Chinese Patent Application No. 202211407131.2 filed in China on November 10, 2022, which is incorporated herein by reference in its entirety.

### TECHNICAL FIELD

The disclosure belongs to the technical field of communication, and particularly relates to a method for transmitting assistance information, a method for receiving assistance information, a device, and a readable storage medium.

### BACKGROUND

In a related congestion control mechanism, a network device can perform adjustment according to a related network state and quality-of-service of a terminal, but cannot achieve refined congestion control. In related access control, the network device can configure access parameters for the terminal according to a type of the terminal and a service condition of the terminal, but cannot accurately perform access control according to service experiences at a terminal side.

### SUMMARY

Embodiments of the disclosure provide a method for transmitting assistance information, a method for receiving assistance information, a device, and a readable storage medium, which can solve a problem that a network device cannot achieve refined congestion control and accurate access control.

A first aspect provides a method for transmitting assistance information. The method includes:
transmitting, by a terminal, the assistance information to a network device. The assistance information includes at least one of the following:
user quality of experience (Quality of Experience, QoE) information;
user satisfied rate information;
a data rate;
a data error rate;
packet loss information;
delay statistic information of a data packet;
congestion information;
buffer (buffer) occupancy information of an uplink transmission end;
buffer data information of a downlink reception end; and
display buffer (display buffer) data information of the terminal.

A second aspect provides a method for receiving assistance information. The method includes:
receiving, by a network device, the assistance information from a terminal; and
executing, by the network device, a processing operation according to the assistance information.

The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

A third aspect provides an apparatus for transmitting assistance information. The apparatus includes:
a first transmission module configured to transmit, by a terminal, the assistance information to a network device. The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

A fourth aspect provides an apparatus for receiving assistance information. The apparatus includes:
a second reception module configured to receive, by a network device, the assistance information from a terminal; and
a processing module configured to execute, by the network device, a processing operation according to the assistance information.

The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

A fifth aspect provides a terminal. The terminal includes a processor and a memory. The memory stores a program or an instruction runnable on the processor. When the program or the instruction is executed by the processor, steps of the method according to the first aspect are implemented.

A sixth aspect provides a terminal. The terminal includes a processor and a communication interface. The communication interface is used for transmitting, by the terminal, assistance information to a network device. The assistance information includes at least one of the following:
user quality of experience (QoE) information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

A seventh aspect provides a network device. The network device includes a processor and a memory. The memory stores a program or an instruction runnable on the processor. When the program or the instruction is executed by the processor, steps of the method according to the second aspect are implemented.

An eighth aspect provides a network device. The network device includes a processor and a communication interface. The communication interface is used for receiving, by the network device, assistance information from a terminal.

The processor is used for executing, by the network device, a processing operation according to the assistance information.

The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

A ninth aspect provides a communication system. The communication system includes: a terminal and a network device. The terminal is used for executing steps of the method according to the first aspect. The network device is used for executing steps of the method according to the second aspect.

A tenth aspect provides a readable storage medium. The readable storage medium stores a program or an instruction. When the program or the instruction is executed by a processor, steps of the method according to the first aspect are implemented, or steps of the method according to the second aspect are implemented.

An eleventh aspect provides a chip. The chip includes a processor and a communication interface. The communication interface is coupled to the processor. The processor is used for running a program or an instruction, such that the method according to the first aspect is implemented, or the method according to the second aspect is implemented.

A twelfth aspect provides a computer program/program product. The computer program/program product is stored in a storage medium. The computer program/program product is executed by at least one processor, such that steps of the method according to the first aspect are implemented, or steps of the method according to the second aspect are implemented.

In the embodiments of the disclosure, the terminal transmits more refined assistance information to a network, and assists the network device in performing refined congestion control and accurate access control.

### BRIEF DESCRIPTION OF THE DRAWINGS

FIG. 1 is a block diagram of a radio communication system applied to an embodiment of the disclosure;
FIG. 2 is a schematic flow diagram of a method for transmitting assistance information according to an embodiment of the disclosure;
FIG. 3 is a schematic flow diagram of a method for receiving assistance information according to an embodiment of the disclosure;
FIG. 4 is a schematic structural diagram of an apparatus for transmitting assistance information according to an embodiment of the disclosure;
FIG. 5 is a schematic structural diagram of an apparatus for receiving assistance information according to an embodiment of the disclosure;
FIG. 6 is a schematic structural diagram of a communication device according to an embodiment of the disclosure;
FIG. 7 is a schematic structural diagram of a terminal according to an embodiment of the disclosure;
FIG. 8 is a first schematic structural diagram of a network device according to an embodiment of the disclosure; and
FIG. 9 is a second schematic structural diagram of a network device according to an embodiment of the disclosure.

### DETAILED DESCRIPTION

Technical solutions in embodiments of the disclosure will be clearly described below with reference to accompanying drawings in the embodiments of the disclosure. Obviously, the embodiments described are some embodiments rather than all embodiments of the disclosure. Based on the embodiments of the disclosure, all other embodiments obtained by those of ordinary skill in the art should fall within the protection scope of the disclosure.

In the description and claims of the disclosure, terms such as "first" and "second" are intended to distinguish between similar objects but are not used to indicate a specific order or sequence. It should be understood that terms used in this way can be interchanged under appropriate circumstances, such that the embodiment of the disclosure can be implemented in a sequence other than those illustrated or described herein. In addition, the objects distinguished by "first" or "second" are generally objects of a same type with a number of objects without restrictions. For example, a first object can indicate one or more first objects. In addition, "and/or" in the description and the claims represents at least one of connected objects, and the character "/" generally represents an "or" relation between two associated context objects.

It is worth pointing out that the technology described in the embodiment of the disclosure is not restricted to a long term evolution (Long Term Evolution, LTE)/LTE-advanced (LTE-Advanced, LTE-A) system, and can also be used in other radio communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the disclosure are generally used interchangeably, and the described technology can be applied to the systems and radio technologies described above, or applied to other systems and radio technologies. The following description describes a new radio (New Radio, NR) system for illustration. NR terms are used in most of the following description, but the technologies can be applied to applications other than NR system applications, such as a 6^{th} generation (6^{th} Generation, 6G) communication system.

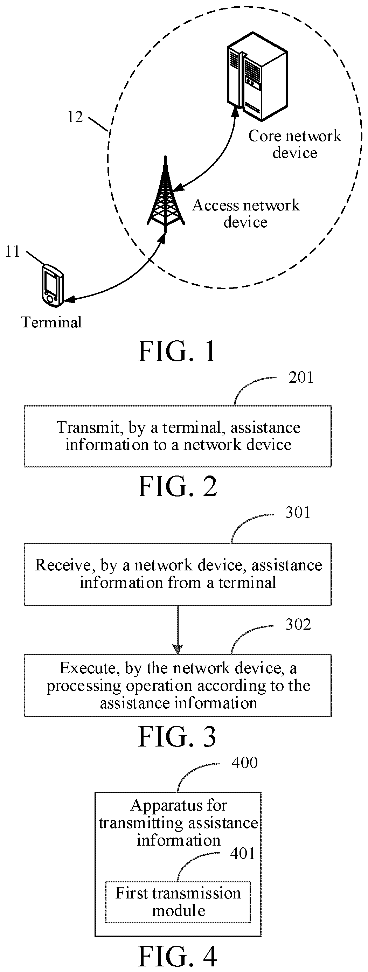

FIG. 1 shows a block diagram of a radio communication system applied to an embodiment of the disclosure. The radio communication system includes a terminal 11 and a network device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home appliance (home equipment having a radio communication function, such as a refrigerator, a television, a washing machine or a furniture), and terminal side devices such as a game machine, a personal computer (personal computer, PC), a teller machine or a self-service machine. The wearable device includes: a smart watch, a smart band, a smart headset, smart glasses, smart jewelry (a smart bracelet, a smart chain bracelet, a smart ring, a smart necklace, a smart anklet, a smart ankle chain, etc.), a smart wrist strap, a smart garment, etc. It should be noted that a specific type of the terminal 11 is not restricted by the embodiment of the disclosure. The network device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (WiFi) node, etc. The base station may be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as same technical effects are achieved. The base station is not restricted to a particular technical vocabulary. It should be noted that in the embodiment of the disclosure, only a base station in an NR system is described as an example, and a specific type of the base station is not restricted. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), etc. It should be noted that in the embodiment of the disclosure, only a core network device in an NR system is described as an example, and a specific type of the core network device is not restricted.

To better understand the technical solutions of the disclosure, the following content will be first described:
eXtended reality (eXtended reality, XR) refers to all real and virtual combined environments and human-computer interactions generated by computer technologies and wearable devices. The eXtended reality includes representative forms such as augmented reality (Augmented Reality, AR), mixed reality (Mixed Reality, MR), and virtual reality (Virtual Reality, VR), and their crossing fields. A level of a virtual world varies from partial sense input to fully-immersive virtual reality. A key aspect of the XR is expansion of human experience, and especially experience related to a sense of existence (represented by the VR) and cognitive learning (represented by the AR).

For VR services, transmission of relatively dense small data packets is mainly at an uplink. The small data packets may carry information such as gestures and control, and are used as input and reference for downlink presentation data. Transmission of multimedia data such as videos and audios is mainly at a downlink. Immersive feelings are provided for a user through timely reception and presentation of the multimedia data. With downlink video data as an example, data packets periodically or quasi-periodically arrive, a data rate may reach dozens or even hundreds of Mbps, a typical value of frames per second (Frames Per Second, FPS) is 60 or 120, and an interval between adjacent data packets is approximately 1/FPS second. The data generally need to be successfully transmitted within 10 ms through radio, and a transmission success rate is required to be not less than 99% or even 99.9%.

For AR services, in addition to the transmission of dense small data packets, the uplink may transmit multimedia data such as videos and audios. Service features of the uplink are similar to those of the downlink. Generally, a data rate is relatively low, and for example, dozens of Mbps at most. A time limit of radio transmission may be widened. For example, successful transmission generally needs to be performed within 60 ms. Downlink data transmission characteristics are substantially consistent with those of the VR services.

The user desires to perform interaction and operation in the eXtended reality, as shown in the following figure. Actions and interactions include actions, gestures, and physical responses. Thus, the degree of freedom (degree of freedom, DoF) describes a number of independent parameters used for defining viewport movement in a 3Dimension (3Dimension, 3D) space.

In an application scene of the XR, the user may obtain information at a new vision angle in virtual reality experience through head turning and other actions. In this case, a head turning action of an XR user may be notified to the base station through transmission of an uplink signal. After receiving the uplink signal, the base station may schedule required downlink data for the XR user for use.

XR services mainly include video data, audio data, and some control signaling and special data that have a control function. In a radio network, XR service transmission mainly involves uplink and downlink video/audio data transmission and interaction between user equipment (User Equipment) and a radio new network (for example, LTE/NR). While transmitting video and audio data, the UE needs to perform uplink transmission of some control signaling and special data that have a control function through a radio network, such that the network is controlled to perform generation, processing and downlink radio transmission of video and audio service data in XR services transmitted by the UE.

Control information and special data that have a control function include some service control data generated by a UE XR application encoder and control data information included in a service transmission protocol. For example:
from an application level, the control information and the special data may include (but are not limited to):
an I frame or a non-field of view (Field of view, FOV) frame generated by a video encoder; and
user behavior data collected by a sensor, such as pose/control (pose/control) data. By receiving the data, the network may determine a user behavior, and for example, a head turning action of the user, such that content of transmitted video data is adjusted.

From a transmission protocol level, the control information and the special data may include:
For transmission control protocol (Transmission Control Protocol, TCP) acknowledged (Acknowledged, ACK) signaling (TCP feedback) for downlink audio/video service transmission, the network needs to determine, according to whether a corresponding video/audio frame is acknowledged by UE, whether to continuously transmit subsequent frames.

Real-time control protocol (Real-time Control Protocol, RTCP) ACK signaling is control signaling used for controlling real-time transmission of data, and determines a real-time requirement of service data transmission and time synchronization.

Generally, the network needs to receive control signaling and special data that have a control function in time and reliably from the UE, so as to obtain a transmission state of a current service and related necessary control information. An application server needs to further generate, based on the information, video and audio service data that need to be transmitted subsequently, transmit the video and audio service data to a radio network for processing and transmission, and finally, transmit the service data to the UE in a downlink manner.

Jitter (jitter) of an XR service packet is as follows:
According to discussion on XR standard items, an XR service belongs to a quasi-periodic service, that is, service packets arrive at equal intervals, and the intervals are relatively small floating-point numbers (non-positive integers) (for example, 30 FPS (FPS refers to frames per second) □33.33 ms, 60 FPS□16.67 ms, and 120 FPS□8.33 ms). In addition, the XR services have a very high delay requirement, and a packet delay budget (Packet Delay Budget, PDB) is required to be around 10 ms.

However, due to factors such as a transmission delay required for a service transmitted from a server end to a base station end, some jitter in time occurs when an XR service packet arrives at a base station side. That is, based on a quasi-period, forward and backward offset within a particular range exists for time of arrival of each service packet, and the offset is referred to as jitter. The offset of Jitter conforms to a clipped Gaussian distribution, with a range of ±4 ms before and after a time position reached by a quasi-periodic service package.

For example, time used for a packet to arrive at the base station end in a quasi-period is n (in units of ms for example). Due to influence of jitter, actual arrival time of the packet is n+j, where j is a size of jitter. For example, the fact that jitter is -1 ms indicates that the actual arrival time of the packet that should arrive at time n is n-1 ms.

An access-stratum (Access-stratum, AC) data transmission mechanism is as follows:
a packet data convergence protocol (Packet Data Convergence Protocol, PDCP) layer and a radio bearer (radio bearer).

Service data generated by an application layer (APP) of the UE may be classified into different service data flows according to corresponding quality-of-service (Quality-of-service, QoS) requirements, and each service data flow corresponds to a same or similar QoS requirement. In the NR system, the service data flow corresponds to one QoS flow (flow). In the LTE system, the service data flow corresponds to one evolved packet system (EPS) bearer.

The service data are delivered to an AS in a form of a data packet (Packet), and are further mapped to a radio bearer (Radio Bearer) on the AS according to a corresponding QoS flow (NR) or EPS bearer (LTE). One radio bearer includes one PDPC entity (a PDPC layer processing entity), one radio link control (Radio Link Control, RLC) entity (a PDPC layer processing entity), and a corresponding logical channel (located at a medium access control (Medium Access Control, MAC) protocol layer).

After one data packet delivered to the AS is mapped to one radio bearer, the data packet may be delivered to a corresponding PDU entity for processing in a form of a PDCP service data unit (service Data Unit, SDU). A PDCP entity may generate a corresponding PDCP protocol data unit (Protocol Data Unicat, PDU) for each arriving PDCP SDU, and sets a PDCP sequence number (sequence number, SN) that is used for indicating a transmission order corresponding to each PDCP SDU and the corresponding PDCP PDU in the PDCP entity. A value of the PDCP SN is set in order in which the PDCP SDU is delivered to the PDCP entity, and a transmission order of the PDCP SDU that arrives first is before a transmission order of the PDCP SDU that is delivered later. Specifically, the PDCP entity may maintain an internal variable, where TX_NEXT indicates a total number of PDCP PDUs transmitted by the PDCP entity, and is used for setting a value of the PDCP SN. The PDCP entity is initialized to 0 during establishment. Every time after one PDCP SDU is delivered to the corresponding PDCP entity from upper layers (Upper layers), the PDCP entity may set the SN of the PDCP PDU corresponding to the PDCP SDU as the TX_NEXT, and add 1 to TX NEXT. Then, the PDCP entity may add a header file to each PDCP SDU and generate a corresponding PDCP PDU, which includes an SN value set for the PDCP PDU. The PDCP entity may generally deliver the PDCP PDUs to a lower protocol layer (e.g. RLC) for subsequent processing and transmission in order of SNs included in the PDCP PDUs. The SN is an ordinal number, and indicates a transmission order of each PDCP SDU.

A general principle is that the earlier the PDCP SDU arrives at the PDCP entity, the less the SN value, and the earlier the transmission.

The RLC layer is as follows:
the PDCP PDU delivered from the PDCP entity to the corresponding RLC entity may be buffered in a buffer zone of the UE as an RLC SDU that is to be transmitted, and further processed by the RLC entity. Specifically, when a transmission resource is allocated to a logical channel corresponding to an RLC entity (with reference to the following introduction to the MAC layer and the logical channel), the RLC entity may determine which RLC SDUs may be multiplexed into the allocated transmission resource for transmission according to an amount of data accommodated by the allocated transmission resource and an amount of data of RLC SDUs that are to be transmitted in a buffer zone.

For one or more RLC SDUs determined by the RLC entity and completely multiplexed into the allocated transmission resources, the RLC entity may add corresponding RLC header files to the RLC SDUs, generate corresponding RLC PDUs, and deliver the RLC PDUs to a lower protocol layer (MAC) for subsequent processing and transmission. However, after the above-mentioned complete RLC PDU is multiplexed, if there are still some resources left and the resources are not enough to multiplex a complete RLC SDU (that is, an amount of data supported by the resources is less than an amount of data required for multiplexing a next RLC SDU), the RLC entity may perform segmentation processing, that is, add header files to part of data of a next RLC SDU that is to be transmitted, generate the RLC PDU, and deliver the RLC PDU to the lower protocol layer for subsequent processing and transmission.

For such a segmented RLC SDU, the rest may still be kept in the buffer zone of the UE, and may be further transmitted after arrival of next uplink transmission resources.

The MAC layer and the logical channel are as follows:
an RLC entity corresponding to each radio bearer further corresponds to a logical channel (logical channel) at the MAC layer. When an uplink grant (Uplink grant) is allocated to the UE, an MAC entity of the UE may further allocate uplink transmission resources between a plurality of logical channels. Specifically, each logical channel corresponds to a logical channel priority. Based on a resource allocation mechanism of logical channel prioritization (Logical channel prioritization, LCP), the MAC entity of the UE allocates available transmission resources for the uplink transmission to each logical channel in order by logical channel priorities from high to low, which correspond to an amount of data that may be transmitted by each logical channel.

As described above, based on the transmission resource allocated to each logical channel, a corresponding RLC entity may deliver one or more RLC PDUs to a corresponding logical channel of the MAC layer. The MAC layer may use the RLC PDUs obtained by each logical channel from the RLC entity as MAC SDUs that are to be transmitted, add an MAC header file to the corresponding logical channel, form an MAC subPDU corresponding to the logical channel, and multiplex the MAC subPDU into the entire transmission resource as data transmitted by the logical channel in the uplink transmission. MAC subPDUs of the plurality of logical channels may be combined together to finally form a MAC PDU as a data packet transmitted in the uplink, so as to be transmitted to the network through radio signals.

It should be noted that the RLC entity may segment the RLC SDU (as mentioned above), the UE needs to multiplex the remaining part of the RLC SDU that is segmented in previous transmission and not completely transmitted into the resource for transmission for the uplink transmission resources obtained by each piece of UE, and then may transmit subsequent data packets corresponding to other RLC SDUs.

In existing LTE and NR networks, the UE generally implements the above-mentioned uplink data processing and transmission processes through a principle of "first arrive first transmitted" for data of each radio bearer. Specifically, for each radio bearer, the UE may process data packets (service data units (Service Data Unit, SDU)) at each protocol layer in order of delivering the data packets to the corresponding entities at the layer, and then deliver the processed data packets (protocol data unit (PDU)) to a next protocol layer in order. That is, the corresponding packet data convergence protocol (Packet Data Convergence Protocol, PDCP) entity may set a previous PDCP SN value for the data packet delivered to the AS first, such that processing of each of the above-mentioned protocol layers is obtained first, and then multiplexed into the uplink resources for transmission first. A later value of the PDCP SN may be allocated to the data packet that arrives later, and the data packet may be generally processed, multiplexed and transmitted by each of the protocol layers after the data packet that arrives previously. It is indicated that, for the data packet mapped to each radio bearer, the UE finally executes a sequential transmission mechanism in order in which the data packets arrive at the AS.

The principle is mainly based on consideration of the transmission delay as follows: In an existing radio network, data in each radio bearer have basically the same transmission delay requirements. In the existing radio network, the UE AS is not allowed to obtain specific content of each data packet, and it is impossible to execute differentiation processing for each data packet. Thus, it is a proper way in the prior art to perform uplink processing, scheduling and transmission on the data packets in order of arrival of the data packets, from the perspective of ensuring the delay as much as possible.

### PDCP layer discard timer (Discard timer)

A basic principle of DiscardTimer is as follows: A DRB discard timer only exists in a data radio bearer (Data Radio Bearer, DRB). A transmission side may start a new timer for each SDU from an upper layer, and discards the SDU after expiration, which is used for preventing transmission buffer congestion. Specific duration of the timer is configured by upper radio resource control (Radio Resource Control, RRC).

Specifically,
when a PDCP SDU delivered by the upper layers is received, a PDCP entity at the transmission side starts a discard timer associated with the PDCP SDU.

When the discard timer associated with the PDCP SDU expires, or the PDCP SDU is successfully transmitted (that is, successful transmission is determined through a PDCP state report), the PDCP entity at the transmission side needs to discard the PDCP SDU and the corresponding PDCP data PDU. If the PDCP data PDU is transmitted to the lower layer, the lower layer needs to be instructed to discard the PDCP data PDU.

For a signalling radio bearer (Signalling Radio Bearer, SRB), when the upper layer requests a PDCP SDU to be discarded, the PDCP entity needs to discard all stored PDCP SDUs and PDCP PDUs.

Clearly, discarding a PDCP SDU associated with the PDCP SN may cause a SN gap (gap) in the transmitted PDCP data PDU, such that a corresponding PDCP re-ordering (re-ordering) delay may be added in reception of the PDCP entity. In this case, how to minimize the SN gap after the SDU is discarded may be ensured based on the UE.

4, Access control and unified access control (Unified Access Control, UAC) are introduced as follows:
Regarding an access control function:
various access control solutions are defined in 3GPP LTE, and include access category barring (Access Category Barring, ACB), extended access barring (Extended Access Barring, EAB), service specific access control (Service Specific Access Control, SSAC), and application specific congestion control (Application Specific Congestion Control, ACDC) for data communication.

Unified access control (unified Access control, UAC) is defined in fifth-generation (5G) NR. Access control of a terminal is implemented by configuring access control information corresponding to an identity (ID) through the network.

### (1) Introduction to access control

A next generation radio access network (NG-RAN) supports overload and access control functions, such as random access channel (Random Access Channel, RACH) backoff, RRC connection rejection, RRC connection release, and a UE-based access prohibition mechanism.

### (2) Introduction to UAC

The UAC is requested by upper layers (upper layers) or an RRC layer, and aims to execute access barring check (access barring check) on access attempts associated with an access category (access category) and one or more access identities (access identities). Reference is made to the following table (Table 1) for configurations of the access category and the access identity.

**Table 1: a mapping table for the access identity/access category and RRC establishment causes when an N1 NAS signaling connection is established through NR connected to a 5G core network (CN) (Table 1: Mapping table for access identities/access categories and RRC establishment cause when establishing N1 NAS signalling connection via NR connected to 5GCN)**

| Rule (Rule #) | Access identities (Access identities) | Access categories (Access categories) | RRC establishment cause is set to (RRC establishment cause is set to) |
|---|---|---|---|
| 1 | 1 | Any category (Any category) | mps-Priority Access (Priority Access) |
| 2 | 2 | Any category | mcs-Priority Access |
| 3 | 11, 15 | Any category | highPriority Access |
| 4 | 12, 13, 14, | Any category | highPriority Access |
| | | 0 (= MT_acc) | mt-Access |
| | | 1 (= delay tolerant) | Not applicable (Not applicable) (NOTE 1) |
| | | 2 (= emergency) | Emergency (emergency) |
| | | 3 (= MO_sig) | mo-Signalling (Signalling) |
| | | 4 (= MO MMTel voice) | mo-VoiceCall (VoiceCall) |
| 5 | 0 | 5 (= MO MMTel video) | mo-VideoCall (VideoCall) |
| | | 6 (= MO SMS and SMSoIP) | mo-Short Message Service (Short Message Service, SMS) |
| | | 7 (= MO_data) | mo-Data (Data) |
| | | 9 (= MO International Mobile Subscriber (International Mobile Subscriber, IMS) registration related signalling) | mo-Data |
| NOTE 1: UE using access category 1 for the access barring check will determine a second access category in ranges 3 to 7, where the category is to be used for determination of an RRC establishment cause. See subclause 4.5.2, table 4.5.2.2, NOTE 6. (A UE using access category 1 for the access barring check will determine a second access category in the range 3 to 7 that is to be used for determination of the RRC establishment cause. See subclause 4.5.2, table 4.5.2.2, NOTE 6). | | | |
| NOTE 2: for use of related access identities 0, 1, 2, and 11 to 15, reference is made to subclause 4.5.2, subitems 4.5.2 and 11 to 15. (See subclause 4.5.2, table 4.5.2.1 for use of the access identities of 0, 1, 2, and 11-15). | | | |

**Table 2: a mapping table for access identities/access categories and RRC establishment causes when an N1 NAS signalling connection is established through evolved universal terrestrial radio access (E-UTRA) connected to the 5GCN (Mapping table for access identities/access categories and RRC establishment cause when establishing N1 NAS signalling connection via E-UTRA connected to 5GCN)**

| Rule # | Access identities | Access categories | RRC establishment cause is set to |
|---|---|---|---|
| 1 | 1 | Any category | highPriority Access |
| 2 | 2 | Any category | highPriority Access |
| 3 | 11, 15 | Any category | highPriority Access |
| 4 | 12, 13, 14, | Any category | highPriority Access |
| | | 0 (= MT_acc) | mt-Access |
| | | 1 (= delay tolerant) | Not applicable (NOTE 1) |
| | | 2 (= emergency) | emergency |
| | | 3 (= MO_sig) | mo-Signalling |
| | | 4 (= MO MMTel voice) | mo-VoiceCall |
| 5 | 0 | 5 (= MO MMTel video) | mo-VoiceCall |
| | | 6 (= MO SMS and SMSoIP) | mo-Data |
| | | 7 (= MO_data) | mo-Data |
| | | 9 (= MO IMS registration related signalling) | mo-Data |
| | | 10 (= MO exception data) | mo-ExceptionData (ExceptionData) (NOTE 3) |
| NOTE 1: A UE using access category 1 for the access barring check will determine a second access category in the range 3 to 7 that is to be used for determination of the RRC establishment cause. See subclause 4.5.2, table 4.5.2.2, NOTE 6. | | | |
| NOTE 2: See subclause 4.5.2, table 4.5.2.1 for use of the access identities of 0, 1, 2, and 11-15. | | | |
| NOTE 3 is applied to UE in an NB-N1 mode (This applies to the UE in NB-N1 mode). | | | |

### UAI introduction:

In the LTE and NR systems, the terminal reports the following objectives to the network as follows:
power saving (power saving) is achieved;
a delay budget report (delay budget report) is provided;
overheating (overheating) of the terminal is achieved;
the terminal does not expect to receive and transmit data in a near future (near future);
whether reference time information is provided is expected;
frequency of interference influence of in-device coexistence (In-Device Coexistence, IDC) is provided; and
a Sidelink traffic pattern (traffic pattern) is reported in a sidelink (sidelink, SL).

UE assistance information (UE assistance information, UAI) is transmitted to a network device. The assistance information includes the following: discontinuous reception (Discontinuous Reception, DRX) related parameters, a secondary cell group configuration (Secondary Cell Group, SCG configuration), a secondary cell (Secondary Cell, Scell) configuration number, an aggregation bandwidth, a multiple-input multiple-output (Multiple-Input Multiple-Output, MIMO) layer, minimum scheduling offset (offset) K0/K2, RRC states (a connected state (connected), an inactive state (inactive), and an idle mode (idle mode)), reference time, IDC interference frequency, SL service information, etc.

Specifically,
when the following condition is configured, the UE may transmit a signal to the network through UE assistance information (UEAssistanceInformation):
for the delay budget report, adjustment of a connection mode DRX cycle length is tended to;
for internal overheating;
for power saving, some DRX parameter values and/or a reduced maximum number of secondary component carriers, and/or a reduced maximum aggregation bandwidth, and/or a maximum number of MIMO layers and/or minimum scheduling offsets K0 and K2 are preferred;
if no transmission or reception of any more data in the near future is expected, and in this case, a preference for switching from RRC_CONNECTED, where the indication may indicate a preferred RRC state, or a previously indicated preference for switching from RRC _CONNECTED may be canceled;
if the UE likes (dislikes) providing the reference time information;

A list of frequencies influenced by IDC problems (see clause 23.4 of TS 36.300[2]).

Note: only frequency division multiplexing (FDM) solution defined for evolved UMTS universal terrestrial radio access (Evolved Universal Terrestrial Radio Access, E-UTRA) is used in NR. The defined requirements of radio resource management (Radio resource management, RRM)/radio link monitoring (Radio Link Monitoring, RLM)/channel state information (Channel State Information, CSI) measurement in different stages of IDC interference are applicable, and are applicable to NR service cells.

In a second case, the UE may indicate a preference to temporarily reduce a number of maximum secondary component carriers, a maximum aggregation bandwidth, and a maximum number of MIMO layers. In all cases, whether to accept the request is determined by gNB.

For a side chain, the UE may report an SL service mode to the NG-RAN for periodic service.

### UAI handover process (During Handover):

In a handover process, if the UE transmits UAI within 1 second before receiving a handover command or a reconfiguration with sync command (handover command, or reconfiguration with sync) and the UE in the corresponding cell group (cell group) is still configured to provide the concerned (concerned) UAI after successful handover, after handover is successful or an RACH process is successfully completed, transmission of the concerned UAI is initiated (initiate) in the corresponding cell group is retransmission of a UAI message in a target cell after successful handover. And/or, an associated prohibit timer (prohibit timer) related to concerned UAI is started or restarted.

In a sidelink network, if a target primary cell (Primary cell, Pcell) provides a system information block 12 (System Information Block 12, SIB12), and within 1 s before the UE receives an RRC reconfiguration message that includes a synchronous reconfiguration message in a Spcell configuration of a master cell group (Master cell group, MCG), SL UE information (sidelink UE information) is transmitted, where the information indicates change of sidelink communication related parameters on a target pcell, transmission of the sidelink UE information is initiated.

In a prior congestion control mechanism, a network device performs adjustment according to a prior network state and quality-of-service of a terminal, such as reduction in user rate or reduction in a number of users admitted. Refined per-QoS flow or per-DRB congestion control cannot be performed.

In existing access control, a network device configures access parameters (Unified Access control (UAC) for a terminal according to a type of the terminal and a service condition of the terminal. Access control cannot be accurately performed according to service experiences at a terminal side.

The method for transmitting assistance information and the method for receiving assistance information according to the embodiments of the disclosure will be described in detail below through some embodiments and their application scenes with reference to the accompanying drawings.

With reference to FIG. 2, an embodiment of the disclosure provides a method for transmitting assistance information. An execution entity of the method is a terminal. The method includes the following steps:
Step 201: The terminal transmits the assistance information to a network device.

The assistance information includes at least one of the following:
(1) user quality of experience (Quality of Experience, QoE) information, which includes relevant parameters of QoE, such as a QoE level;
(2) user satisfied rate information, such as whether a user is satisfied, a satisfied rate level, a satisfied rate (satisfied rate), etc.;
(3) a data rate;
(4) a data error rate, which includes a data loss rate (data loss rate), a packet error rate (Packet Error Rate, PER), a packet symbol error rate (Packet symbol error rate, PSER), etc.;
(5) packet loss information, which includes data loss (data loss), packet loss (Packet loss), etc.;
(6) delay statistic information of a data packet, such as packet delay information (packet delay information), an average delay of a data packet, remaining delay information (remaining), a packet delay budget (Packet Delay Budget, PDB)/a packet symbol delay budget (Packet Symbol Delay Budget, PSDB), and waiting time, and
   specifically, a delay, an average delay, a remaining PDB/PSDB and waiting time corresponding to a data packet received by a reception end;
(7) congestion information, such as whether congestion is performed or a congestion level;
(8) buffer (buffer) occupancy information of an uplink transmission end, which includes: whether a buffer is empty, whether a buffer is sufficient, whether a buffer is full, a data volume in a buffer, a buffer occupancy ratio, and a buffer occupancy level (for example, several levels defined according to an empty buffer or a full buffer);
(9) buffer data information of a downlink reception end, which includes: whether a buffer is empty, whether a buffer is sufficient, whether a buffer is full, a data volume in a buffer of a reception end, a buffer occupancy ratio, and a buffer occupancy level (for example, several levels defined according to an empty buffer or a full buffer); and
(10) display buffer (display buffer) data information of the terminal, which includes: whether a buffer is empty, whether a buffer is sufficient, whether a buffer is full, a data volume in a display buffer, a buffer occupancy ratio, and a buffer occupancy level (for example, several levels defined according to an empty buffer or a full buffer).

Through the categories (1) to (10) of the assistance information, the terminal provides detailed and accurate assistance information for a network device, such that a network is assisted in performing more detailed and accurate control processing. Compared with the related art, the terminal only provides assistance information related to its own state. In the embodiments of the disclosure, the terminal transmits more refined assistance information to the network, and assists the network device in performing refined congestion control and accurate access control.

In a possible implementation, the assistance information is used for at least one of the following operations:
(1) congestion control, where for example, according to information (such as a delay, a satisfied rate, and packet loss information) of per-UE/internet protocol (IP) flow/QoS flow/DRB/logical channel (Logical Channel, LCH)/PDU set (PDU set)/PDU/frame (Frame)/slice (Slice)/Packet reported by the terminal, a network device performs corresponding congestion control adjustment;
(2) access control, where for example, access to corresponding UE/IP flow/QoS flow/DRB/LCH/PDU set/PDU/Frame/Slice/Packet is independently controlled;
(3) adjustment of a scheduling-related configuration, where for example, according to the assistance information reported by the terminal, the network device adjusts scheduling corresponding to the corresponding UE/IP flow/QoS flow/DRB/LCH/PDU set/PDU/Frame/Slice/Packet, which includes adjustment of a scheduling priority, a scheduling algorithm, an LCH priority, data packet multiplexing (multiplexing), etc.; and
(4) adjustment of a transmission-related configuration from a network device, where for example, according to the assistance information reported by the terminal, the network device adjusts RRC configurations, such as a DRX configuration and a serving cell (Serving cell) configuration, corresponding to the UE/IP flow/QoS flow/DRB/LCH/PDU set/PDU/Frame/Slice/Packet.

In a possible implementation, the operations include at least one of the following:
(1) a per-user equipment (Per-UE) operation;
(2) a per-internet protocol (Per-IP) flow operation;
(3) a per-quality-of-service (Per-QoS) flow operation;
(4) a per-data radio bearer (Per-DRB) operation;
(5) a per-logical channel (Per-LCH) operation;
(6) a per-protocol data unit set (Per-PDU set) operation;
(7) a per-protocol data unit (Per-PDU) operation;
(8) a per-frame (Per-frame) operation;
(9) a per-slice (Per-slice) operation; and
(10) a per-packet (Per-packet) operation.

That is, the operations such as congestion control, access control and scheduling adjustment may all be executed according to granularity of (1) to (10). For example, congestion control, scheduling adjustment, access control and network configuration adjustment of per-UE//IP flow/QoS flow/DRB/LCH/PDU set/PDU/Frame/Slice/Packet are performed.

In a possible implementation, granularity of the assistance information includes at least one of the following:
(1) Per-UE granularity, that is, corresponding assistance information reported by each piece of UE;
(2) Per-IP flow granularity, that is, assistance information corresponding to each IP flow, where
   further, the assistance information includes IP flow identity information, such as an IP flow identity (ID) used for indicating a corresponding IP flow;
(3) Per-QoS flow granularity, that is, assistance information corresponding to each QoS flow, where
   further, the assistance information includes QoS flow identity information, such as a QoS flow identity (ID) used for indicating a corresponding QoS flow;
(4) Per-DRB granularity, that is, assistance information corresponding to each DRB, where
   further, the assistance information includes DRB identity information or PDCP entity identity information used for indicating a corresponding DRB;
(5) Per-LCH granularity, that is, assistance information corresponding to each LCH, where
   further, the assistance information includes LCH identity information used for indicating a corresponding LCH;
(6) Per-PDU set granularity;
(7) Per-PDU granularity;
(8) Per-frame granularity;
(9) Per-slice granularity; and
(10) Per-packet granularity.

The granularity of the assistance information is the assistance information corresponding to each PDU set/PDU/frame/slice/packet.

It should be noted that the assistance information corresponding to each Per-UE/IP flow/QoS flow/DRB/LCH/PDU set/PDU/frame/slice/packet herein is assistance information corresponding to the granularity of the UE/IP flow/QoS flow/DRB/LCH/PDU set/PDU/frame/slice/packet, which does not mean that each UE/IP flow/QoS flow/DRB/LCH/PDU set/PDU/frame/slice/packet needs to be reported, and assistance information corresponding to only part of the UE/IP flow/QoS flow/DRB/LCH/PDU set/PDU/frame/slice/packet may be reported.

Further, the assistance information includes the identity information of the UE/IP flow/QoS flow/DRB/LCH/PDU set/PDU/frame/slice/packet, which is used for indicating a corresponding PDU set/PDU/frame/slice/packet.

In a possible implementation, the method further includes the following step:
the terminal receives configuration information from the network device. The configuration information includes at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity, and for example, IP flow ID information in a Per-IP flow.

That is, the specific granularity information is configured for the UE through the network device. Specific configuration information includes:
(1) reported granularity including granularity of at least one of the following:
   per-UE/IP flow/QoS flow/DRB/LCH/PDU set/PDU/frame/slice/packet;
(2) identity information under each corresponding granularity, which includes at least one of the following:
   IP flow identity information corresponding to the per-IP flow;
   QoS flow identity information corresponding to the per-QoS flow;
   DRB identity information corresponding to the per-DRB;
   LCH identity information corresponding to the per-LCH; and
   PDU set/PDU/frame/slice/packet identity information corresponding to the Per-PDU set/PDU/frame/slice/packet.

Specifically, the identity information herein includes at least one of the following: the IP flow ID information in the per-IP flow, QoS flow ID information in the per-QoS flow, DRB ID information in the per-DRB, LCH ID information in the Per-LCH, and PDU set/PDU/frame/slice/packet ID information in the Per-PDU set/PDU/frame/slice/packet.

It should be noted that if the terminal reports the assistance information to the access network device, granularity information is configured by the access network device, such as a base station gNB. If the terminal reports the assistance information to the core network device, granularity information is still configured by the access network device.

In a possible implementation, the step that the terminal transmits the assistance information to the network device includes the following step:
the terminal transmits the assistance information to the network device through at least one of an RRC message, a medium access control element (Medium Access Control Element, MAC CE), uplink control information (Uplink Control Information, UCI), and a non-access stratum (Non-access stratum, NAS) message.

In a possible implementation, the step that the terminal transmits the assistance information to the network device includes the following step:
the terminal transmits the assistance information to the network device in a case that a preset condition is satisfied.

The case that the preset condition is satisfied includes at least one of the following:
(1) A preset period is satisfied. That is, periodic reporting is performed.
(2) The terminal receives indication information transmitted by the network device, where the indication information is used for indicating any one of the following: the terminal reports the assistance information, the terminal is allowed to report the assistance information, and the terminal reports the assistance information in a case that the assistance information changes;
It should be noted that the configuration herein is a dynamic indication, that is, if an indication of the network device is received, the terminal performs reporting, or if the preset condition is satisfied, the terminal performs reporting. Different from the following configuration transmitted by the network device and received by the terminal, the configuration information transmitted by the network device is static. That is, if the network has a configuration, the terminal may perform reporting or may be allowed to perform reporting, or if the preset condition is satisfied, the terminal may perform reporting.

Optionally, the case that the assistance information changes includes the following:
A user satisfied rate changes, or a change in a user satisfied rate exceeds a second preset threshold, and for example, the user satisfied rate is increased or decreased by several levels.

The data rate changes, or a change in the data rate exceeds a third preset threshold, and for example, the data rate is increased or decreased by several levels.

The data error rate changes, or a change in the data error rate exceeds a fourth preset threshold, and for example, the data error rate is increased or decreased by several levels.

The packet loss information changes, or a change in the packet loss information exceeds a fifth preset threshold, and for example, the packet loss information is increased or decreased by several levels.

The delay statistic information of the data packet changes, or a change in the delay statistic information of the data packet exceeds a sixth preset threshold, and for example, the delay statistic information of the data packet is increased or decreased by several levels.

The congestion information changes, or a change in the congestion information exceeds a seventh preset threshold, and for example, the congestion information is increased or decreased by several levels.

The buffer occupancy information of the uplink transmission end changes, or a change in the buffer occupancy information of the uplink transmission end exceeds an eighth preset threshold, and for example, the buffer occupancy information is increased or decreased by several levels.

The buffer data information of the downlink reception end changes, or a change in the buffer data information of the downlink reception end exceeds a ninth preset threshold, and for example, the buffer data information is increased or decreased by several levels.

The display buffer data information of the terminal changes, or a change in the display buffer data information of the terminal exceeds a tenth preset threshold, and for example, the display buffer data information is increased or decreased by several levels.

The preset thresholds are configured by the network device or agreed by a protocol.

(3) A preset timer expires or a preset timer is not in a running state. The preset timer is configured by the network device or agreed by a protocol.

In a possible implementation, granularity of the preset timer includes at least one of the following:
(1) Per-UE granularity, which indicates that each piece of UE corresponds to a preset timer;
(2) Per-IP flow granularity, which indicates that each IP flow corresponds to a preset timer;
(3) Per-QoS flow granularity, which indicates that each QoS flow corresponds to a preset timer;
(4) Per-DRB granularity, which indicates that each DRB corresponds to a preset timer;
(5) Per-LCH granularity, which indicates that each LCH corresponds to a preset timer;
(6) Per-PDU set granularity;
(7) Per-PDU granularity;
(8) Per-frame granularity;
(9) Per-slice granularity; and
(10) Per-packet granularity.

That is, each PDU set/PDU/frame/slice/packet corresponds to a preset timer.

It should be noted herein that the granularity of the preset timer is not necessarily the same as that of the assistance information. For example, the granularity is per-QoS, or may be per-UE herein.

In a possible implementation, the step that the terminal transmits the assistance information to the network device includes the following steps:
the terminal transmits the assistance information to an application server, and the application server transmits the assistance information to the network device. That is, a user side reports the assistance information to an application side server, and then transmits the assistance information to a network side node through a service side at an application side.

In a possible implementation, the step that the terminal transmits the assistance information to the network device includes the following step:
the terminal reports the assistance information in a case that the terminal receives a configuration from a network device and the terminal is allowed to report the assistance information; or
the terminal reports the assistance information if the terminal satisfies the preset condition in a case that the terminal receives a configuration from a network device and the terminal is allowed to report the assistance information.

It should be noted that the configuration herein is a static configuration. That is, if the network has a configuration, the terminal may perform reporting or may be allowed to perform reporting, or if the preset condition is satisfied, the terminal may perform reporting. Different from the indication information received by the terminal and transmitted by the network device, the indication information transmitted by the network device is dynamic, that is, an indication is provided for each time of reporting. Specifically, the terminal receives the indication and then performs reporting.

With reference to FIG. 3, an embodiment of the disclosure provides a method for receiving assistance information. An execution entity of the method is a network device. The network device may be an access network device, such as a base station, or may be a core network device. The method includes the following steps:
Step 301: The network device receives the assistance information from a terminal.
Step 302: The network device executes a processing operation according to the assistance information.

The assistance information includes at least one of the following:
(1) user QoE information;
(2) user satisfied rate information;
(3) a data rate;
(4) a data error rate;
(5) packet loss information;
(6) delay statistic information of a data packet;
(7) congestion information;
(8) buffer occupancy information of an uplink transmission end;
(9) buffer data information of a downlink reception end; and
(10) display buffer data information of the terminal.

In a possible implementation, the processing operation includes at least one of the following operations:
(1) congestion control, where for example, according to information (such as a delay, a satisfied rate, and packet loss information) of per-UE/IP flow/QoS flow/DRB/LCH/PDU set/PDU/Frame/Slice/Packet reported by the terminal, a network device performs corresponding congestion control adjustment;
(2) access control, where for example, access to corresponding UE/IP flow/QoS flow/DRB/LCH/PDU set/PDU/Frame/Slice/Packet is independently controlled;
(3) adjustment of a scheduling-related configuration, where for example, according to the assistance information reported by the terminal, the network device adjusts scheduling corresponding to the corresponding UE/IP flow/QoS flow/DRB/LCH/PDU set/PDU/Frame/Slice/Packet, which includes adjustment of a scheduling priority, a scheduling algorithm, an LCH priority, data packet multiplexing, etc.; and
(4) adjustment of a transmission-related configuration from a network device, where for example, congestion control, scheduling adjustment, access control and network configuration adjustment of per-UE//IP flow/QoS flow/DRB/LCH/PDU set/PDU/Frame/Slice/Packet are performed.

In a possible implementation, the congestion control includes at least one of the following:
(1) a Per-UE operation;
(2) a Per-IP flow operation;
(3) a Per-QoS flow operation;
(4) a Per-DRB operation;
(5) a Per-LCH operation;
(6) a Per-PDU set operation;
(7) a Per-PDU operation;
(8) a Per-frame operation;
(9) a Per-slice operation; and
(10) a Per-packet operation.

In a possible implementation, granularity of the assistance information includes at least one of the following:
(1) Per-UE granularity;
(2) Per-IP flow granularity;
(3) Per-QoS flow granularity;
(4) Per-DRB granularity;
(5) Per-LCH granularity;
(6) Per-PDU set granularity;
(7) Per-PDU granularity;
(8) Per-frame granularity;
(9) Per-slice granularity; and
(10) Per-packet granularity.

In a possible implementation, the method further includes the following step:
the network device transmits configuration information to the terminal. The configuration information includes at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for identifying at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

In a possible implementation, the step that the network device receives the assistance information from the terminal includes the following step:
the network device receives the assistance information from the terminal through at least one of an RRC message, an MAC CE, UCI, and an NAS message.

In a possible implementation, the step that the network device receives the assistance information from the terminal includes the following step:
the network device receives the assistance information from an application server or a core network device. The assistance information is transmitted by the terminal to the application server or to the core network device.

In a possible implementation, in a case that the network device includes an access network device, the method further includes the following step:
the network device transmits the assistance information to the core network device or the application server.

In a possible implementation, in a case that the network device includes the core network device, the method further includes the following step:
the network device transmits the assistance information to the access network device or the application server.

Optionally, a network side node reports the assistance information to an application side server. Or, when a preset condition is satisfied, a network side node reports the assistance information to an application side server. The preset condition may be the same as a preset condition that is satisfied when the terminal reports the assistance information, and will not be repeated herein.

In a possible implementation, the assistance information is used for the application server to adjust an encoding rate based on the assistance information. That is, the application side server adjusts the encoding rate based on the assistance information.

With reference to FIG. 4, an embodiment of the disclosure provides an apparatus 400 for transmitting assistance information. The apparatus is applied to a terminal. The apparatus includes:
a first transmission module 401 used for transmitting, by the terminal, the assistance information to a network device. The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

Optionally, the assistance information is used for at least one of the following operations:
congestion control;
access control;
adjustment of scheduling; and
adjustment of a configuration from a network device.

Optionally, the operations include at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

Optionally, granularity of the assistance information includes at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

Optionally, the apparatus further includes:
a first reception module configured to receive, by the terminal, configuration information from the network device. The configuration information includes at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

Optionally, the first transmission module is configured to:
transmit, by the terminal, the assistance information to the network device through at least one of a radio resource control (RRC) message, a medium access control element (MAC CE), uplink control information (UCI), and a non-access stratum (NAS) message.

Optionally, the first transmission module is configured to:
transmit, by the terminal, the assistance information to the network device in a case that a preset condition is satisfied.

The case that a preset condition is satisfied includes at least one of the following:
a preset period is satisfied;
the terminal receives indication information transmitted by the network device, where the indication information is used for indicating any one of the following: the terminal reports the assistance information, the terminal is allowed to report the assistance information, and the terminal reports the assistance information in a case that the assistance information changes;
the assistance information changes; and
a preset timer expires or a preset timer is not in a running state.

Optionally, the case that the assistance information changes includes at least one of the following:
user QoE changes, or a change in user QoE exceeds a first preset threshold;
a user satisfied rate changes, or a change in a user satisfied rate exceeds a second preset threshold;
the data rate changes, or a change in the data rate exceeds a third preset threshold;
the data error rate changes, or a change in the data error rate exceeds a fourth preset threshold;
the packet loss information changes, or a change in the packet loss information exceeds a fifth preset threshold;
the delay statistic information of the data packet changes, or a change in the delay statistic information of the data packet exceeds a sixth preset threshold;
the congestion information changes, or a change in the congestion information exceeds a seventh preset threshold;
the buffer occupancy information of the uplink transmission end changes, or a change in the buffer occupancy information of the uplink transmission end exceeds an eighth preset threshold;
the buffer data information of the downlink reception end changes, or a change in the buffer data information of the downlink reception end exceeds a ninth preset threshold; and
the display buffer data information of the terminal changes, or a change in the display buffer data information of the terminal exceeds a tenth preset threshold.

Optionally, granularity of the preset timer includes at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

Optionally, the first transmission module is configured to:
transmit, by the terminal, the assistance information to an application server, wherein the assistance information is transmitted by the application server to the network device.

Optionally, the first transmission module is configured to:
report the assistance information by the terminal in a case that the terminal receives a configuration from a network device and the terminal is allowed to report the assistance information;
   or,
reporting the assistance information by the terminal if the terminal satisfies the preset condition in a case that the terminal receives a configuration from a network device and the terminal is allowed to report the assistance information.

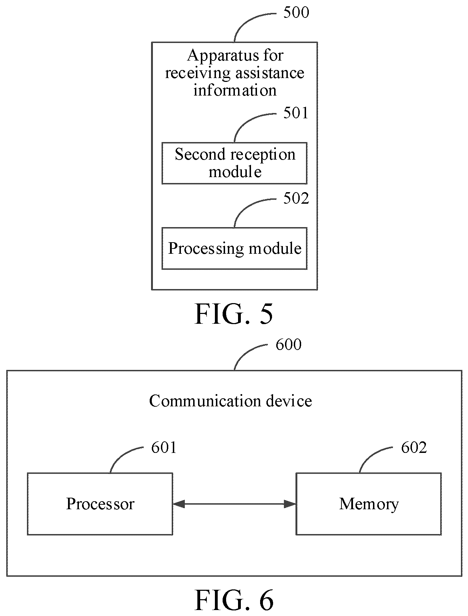

With reference to FIG. 5, an embodiment of the disclosure provides an apparatus 500 for receiving assistance information. The apparatus includes:
a second reception module 501 used for receiving, by a network device, the assistance information from a terminal; and
a processing module 502 used for executing, by the network device, a processing operation according to the assistance information.

The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

Optionally, the processing operation includes at least one of the following operations:
congestion control;
access control;
adjustment of scheduling; and
adjustment of a configuration from a network device.

Optionally, the operations include at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

Optionally, granularity of the assistance information includes at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

Optionally, the apparatus further includes:
a second transmission module configured to transmit, by the network device, configuration information to the terminal. The configuration information includes at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

Optionally, the second reception module 501 is used for:
receiving, by the network device, the assistance information from the terminal through at least one of an RRC message, an MAC CE, UCI, and an NAS message.

Optionally, the second reception module 501 is used for:
receiving, by the network device, the assistance information from an application server or a core network device. The assistance information is transmitted by the terminal to the application server or to the core network device.

Optionally, in a case that the network device includes an access network device, the apparatus further includes:
a third transmission module configured to transmit, by the network device, the assistance information to a core network device or an application server.

Optionally, in a case that the network device includes a core network device, the apparatus further includes:
a fourth transmission module configured to transmit, by the network device, the assistance information to an access network device or an application server.

Optionally, the assistance information is used for the application server to adjust an encoding rate based on the assistance information.

The apparatus for transmitting assistance information and the apparatus for receiving assistance information in the embodiments of the disclosure may be electronic devices, such as electronic devices having operating systems, or may be components in electronic devices, such as integrated circuits or chips. The electronic device may be a terminal, or may be another device except a terminal. For example, the terminal may include, but is not limited to, types of the terminal 11 listed above. Another device may be a server, a network attached storage (Network Attached Storage, NAS), etc., and is not specifically restricted by the embodiments of the disclosure.

The apparatus for transmitting assistance information and the apparatus for receiving assistance information according to the embodiments of the disclosure can implement all processes implemented in the method embodiments in FIG. 2 to FIG. 3, and achieve same technical effects. To avoid repetition, details will not be repeated herein.

Optionally, as shown in FIG. 6, an embodiment of the disclosure further provides a communication device 600. The communication device includes a processor 601 and a memory 602. The memory 602 stores a program or an instruction runnable on the processor 601. For example, when the communication device 600 is a terminal and the program or the instruction is executed by the processor 601, all steps of the embodiments of the method for transmitting assistance information and the method for receiving assistance information are implemented, and same technical effects can be achieved. When the communication device 600 is a network device and the program or the instruction is executed by the processor 601, all steps of the embodiments of the method for transmitting assistance information and the method for receiving assistance information are implemented, and same technical effects can be achieved. To avoid repetition, details will not be repeated herein.

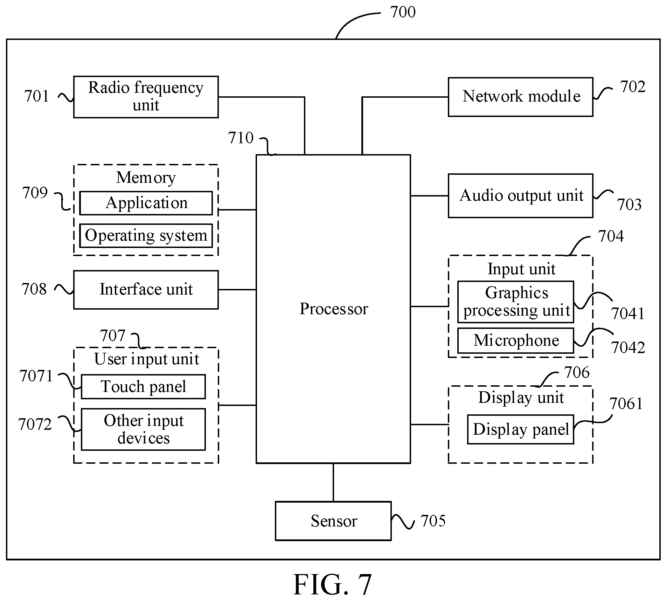

An embodiment of the disclosure further provides a terminal. The terminal includes a processor and a communication interface. The communication interface is used for transmitting, by the terminal, assistance information to a network device. The assistance information includes at least one of the following:
user quality of experience (QoE) information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal. The embodiment of the terminal corresponds to the embodiment of a terminal side method described above. All implementation processes and implementations of the method embodiment may be applied to the embodiment of the terminal, and can achieve same technical effects. Specifically, FIG. 7 is a schematic diagram of a hardware structure of a terminal for implementing an embodiment of the disclosure.

The terminal 700 includes, but is not limited to: at least some of components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (for example, a battery) for supplying power to all components, and the power supply may be logically connected to the processor 710 through a power management system, such that functions such as charging, discharging, and power consumption management are achieved through the power management system. A terminal structure shown in FIG. 7 does not limit the terminal. The terminal may include more or fewer components than those shown in the figure, combine some components, or have different component arrangements, which will not be repeated herein.

It should be understood that, in the embodiment of the disclosure, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061. The display panel 7061 may be configured in a form of a liquid crystal display, an organic light-emitting diode, etc. The user input unit 707 includes a touch panel 7071 and at least one of other input devices 7072. The touch panel 7071 is also referred to as a touchscreen. The touch panel 7071 may include two parts: a touch sensing apparatus and a touch controller. The other input devices 7072 may include, but are not limited to, a physical keyboard, a functional key (for example, a volume control key or a switch key), a track ball, a mouse, and a joystick, which will not be repeated herein.

In the embodiment of the disclosure, after the radio frequency unit 701 receives downlink data from a network device, the data may be transmitted to a processor x10 for processing. In addition, the radio frequency unit 701 may transmit uplink data to the network device. Generally, the radio frequency unit 701 includes, but is not limited to, an antenna, an amplifier, a transceiver, a coupler, a low noise amplifier, a duplexer, etc.

The memory 709 may be used to store a software program or instruction and various data. The memory 709 may mainly include a first storage zone for storing the program or the instruction and a second storage zone for storing data. The first storage zone may store an operating system, an application or an instruction required by at least one function (for example, a sound playback function and an image display function), etc. In addition, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct Rambus random access memory (Direct Rambus RAM, DRRAM). The memory 709 in the embodiment of the disclosure includes, but is not limited to, the memories and any other suitable types of memories.

The processor 710 may include one or more processing units. Optionally, the processor 710 integrates an application processor and a modem processor. The application processor mainly processes operations related to an operating system, a user interface, an application, etc., and the modem processor, such as a baseband processor, mainly processes a radio communication signal. It may be understood that the modem processor may not be integrated into the processor 710.

The radio frequency unit 701 is used for transmitting, by the terminal, the assistance information to the network device. The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

Optionally, the assistance information is used for at least one of the following operations:
congestion control;
access control;
adjustment of scheduling; and
adjustment of a configuration from a network device.

Optionally, the operations include at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

Optionally, granularity of the assistance information includes at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

Optionally, the radio frequency unit 701 is used for receiving the configuration information from the network device. The configuration information includes at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

Optionally, the radio frequency unit 701 is used for:
transmitting the assistance information to the network device through at least one of a radio resource control (RRC) message, a medium access control element (MAC CE), uplink control information (UCI), and a non-access stratum (NAS) message.

Optionally, the radio frequency unit 701 is used for:
transmitting the assistance information to the network device in a case that a preset condition is satisfied.

The case that a preset condition is satisfied includes at least one of the following:
a preset period is satisfied;
the terminal receives indication information transmitted by the network device, where the indication information is used for indicating any one of the following: the terminal reports the assistance information, the terminal is allowed to report the assistance information, and the terminal reports the assistance information in a case that the assistance information changes;
the assistance information changes; and
a preset timer expires or a preset timer is not in a running state.

Optionally, the case that the assistance information changes includes at least one of the following:
user QoE changes, or a change in user QoE exceeds a first preset threshold;
a user satisfied rate changes, or a change in a user satisfied rate exceeds a second preset threshold;
the data rate changes, or a change in the data rate exceeds a third preset threshold;
the data error rate changes, or a change in the data error rate exceeds a fourth preset threshold;
the packet loss information changes, or a change in the packet loss information exceeds a fifth preset threshold;
the delay statistic information of the data packet changes, or a change in the delay statistic information of the data packet exceeds a sixth preset threshold;
the congestion information changes, or a change in the congestion information exceeds a seventh preset threshold;
the buffer occupancy information of the uplink transmission end changes, or a change in the buffer occupancy information of the uplink transmission end exceeds an eighth preset threshold;
the buffer data information of the downlink reception end changes, or a change in the buffer data information of the downlink reception end exceeds a ninth preset threshold; and
the display buffer data information of the terminal changes, or a change in the display buffer data information of the terminal exceeds a tenth preset threshold.

Optionally, granularity of the preset timer includes at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

Optionally, the radio frequency unit 701 is used for:
transmitting the assistance information to an application server, and transmitting, by the application server, the assistance information to the network device.

Optionally, the radio frequency unit 701 is used for:
reporting the assistance information in a case that the terminal receives a configuration from a network device and the terminal is allowed to report the assistance information;
   or,
reporting the assistance information if the terminal satisfies the preset condition in a case that the terminal receives a configuration from a network device and the terminal is allowed to report the assistance information.

An embodiment of the disclosure further provides a network device. The network device includes a processor and a communication interface. The communication interface is used for receiving, by the network device, assistance information from a terminal.

The processor is used for executing, by the network device, a processing operation according to the assistance information.

The assistance information includes at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal. The embodiment of the network device corresponds to the method embodiment of the network device. Various implementation processes and implementations of the method embodiment may be all applied to the embodiment of the network device and can achieve same technical effects.

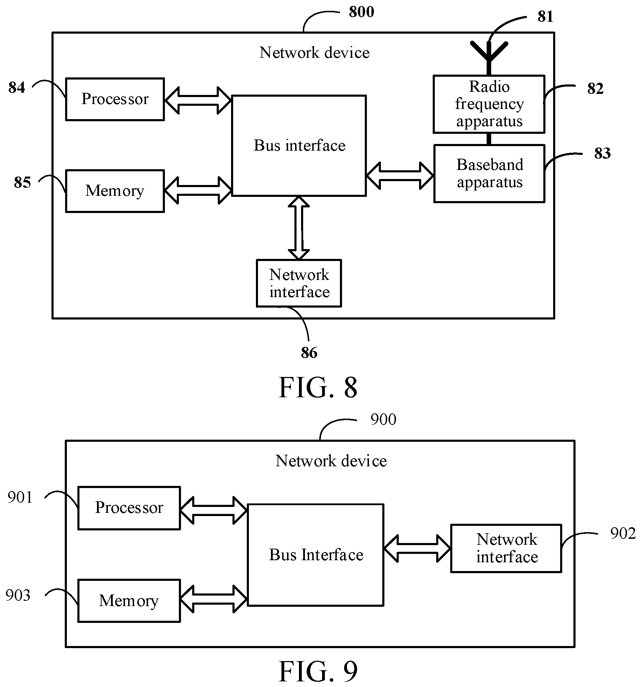

Specifically, an embodiment of the disclosure further provides a network device. The network device is an access network device. As shown in FIG. 8, the network device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes to-be-transmitted information, and transmits the information to the radio frequency apparatus 82. The radio frequency apparatus 82 processes the received information and then transmits the information through the antenna 81.

In the embodiment, the method executed by the network device may be implemented in the baseband apparatus 83. The baseband apparatus 83 includes a baseband processor.

The baseband apparatus 83 may include, for example, at least one baseband board. The baseband board is provided with a plurality of chips. As shown in FIG. 8, one of the chips is a baseband processor for example, and is connected to the memory 85 through a bus interface, such that a program in the memory 85 is invoked to execute operations of the network device shown in the method embodiment.

The network device may further include a network interface 86. The interface is, for example, a common public radio interface (common public radio interface, CPRI).

Specifically, the network device 800 of the embodiment of the disclosure further includes: an instruction or a program stored in the memory 85 and runnable on the processor 84. The processor 84 invokes the instruction or the program in the memory 85 to execute the method executed by each module shown in FIG. 5, and achieves a same technical effect. To avoid repetition, details will not be repeated herein.

Specifically, an embodiment of the disclosure further provides a network device. The network device is a core network device. As shown in FIG. 9, the network device 900 includes: a processor 901, a network interface 902, and a memory 903. The network interface 902 is, for example, a common public radio interface (common public radio interface, CPRI).

Specifically, the network device 900 of the embodiment of the disclosure further includes: an instruction or a program stored in the memory 903 and runnable on the processor 901. The processor 901 invokes the instruction or the program in the memory 903 to execute the method executed by each module shown in FIG. 5, and achieves a same technical effect. To avoid repetition, details will not be repeated herein.

An embodiment of the disclosure further provides a readable storage medium. The readable storage medium stores a program or an instruction. When the program or the instruction is executed by a processor, all processes of the method embodiment in FIG. 2 or FIG. 3 are implemented, and same technical effects can be achieved. To avoid repetition, details will not be repeated herein.

The processor is a processor of the terminal of the embodiment. The readable storage medium includes a computer-readable storage medium, such as a computer read-only memory (ROM), a random access memory (RAM), a magnetic disk, or an optical disk.

An embodiment of the disclosure further provides a chip. The chip includes a processor and a communication interface. The communication interface is coupled to the processor. The processor is used for running a program or an instruction, such that all processes of the method embodiment are implemented, and same technical effects can be achieved. To avoid repetition, details will not be repeated herein.

It should be understood that the chip mentioned in the embodiment of the disclosure may alternatively be referred to as a system on a chip, a system chip, a chip system, a system-on-chip, etc.

An embodiment of the disclosure further provides a computer program/program product. The computer program/program product is stored in a storage medium. The computer program/program product is executed by at least one processor, such that all processes of the method embodiment in FIG. 2 or FIG. 3 are implemented, and same technical effects can be achieved. To avoid repetition, details will not be repeated herein.

An embodiment of the disclosure further provides a communication system. The communication system includes: a terminal and a network device. The terminal is used for executing steps of the method at a terminal side. The network device is used for executing steps of the method at a network device side

It should be noted that terms "include", "comprise", "involve", or their any other variations herein are intended to cover non-exclusive inclusions, such that a process, a method, an article, or an apparatus including a series of elements not only includes those elements, but also includes other elements that are not explicitly listed, or also includes inherent elements of the process, the method, the article, or the apparatus. Without more restrictions, the elements defined by the sentence "including a ..." or "comprising a ..." do not exclude existence of other identical elements in the process, the method, the article, or the apparatus including the elements. In addition, it should be noted that a range of the method and the apparatus in an implementation of the disclosure is not restricted to execution of functions in order shown or discussed, and may further include execution of functions involved in a substantially simultaneous manner or in reverse order. For example, the method described may be executed in order different from that described, and various steps may be added, omitted, or combined. Moreover, features described with reference to some examples may be combined in other examples.

From description of the implementation, those skilled in the art may clearly understand that the methods of the embodiments may be implemented by means of software plus a necessary general-purpose hardware platform, or by means of hardware. In many cases, the former is a better implementation. With such understanding, the technical solution of the disclosure, in essence or from the view of part contributing to the prior art, may be embodied in a form of a computer software product. The computer software product is stored in a storage medium (such as an ROM/RAM, a magnetic disk, and an optical disk) and includes several instructions used to enable a terminal (which may be a mobile phone, a computer, a server, an air conditioner, a network device, etc.) to execute the method according to each embodiment of the disclosure.

The embodiments of the disclosure are described above with reference to the accompanying drawings, but the disclosure is not restricted to the above specific implementations. The specific implementations are merely illustrative rather than restrictive. Inspired by the disclosure, those of ordinary skill in the art may still make many forms without departing from the essence of the disclosure and the protection scope of the claims, which all fall within protection of the disclosure.

## Claims

1. A method for transmitting assistance information, comprising:
transmitting, by a terminal, the assistance information to a network device, wherein the assistance information comprises at least one of the following:
user quality of experience (QoE) information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

2. The method according to claim 1, wherein the assistance information is used for at least one of the following operations:
congestion control;
access control;
adjustment of a scheduling-related configuration; and
adjustment of a transmission-related configuration from a network device.

3. The method according to claim 2, wherein the operations comprise at least one of the following:
a per-user equipment (Per-UE) operation;
a per-internet protocol (Per-IP) flow operation;
a per-quality-of-service (Per-QoS) flow operation;
a per-data radio bearer (Per-DRB) operation;
a per-logical channel (Per-LCH) operation;
a per-protocol data unit set (Per-PDU set) operation;
a per-protocol data unit (Per-PDU) operation;
a per-frame (Per-frame) operation;
a per-slice (Per-slice) operation; and
a per-packet (Per-packet) operation.

4. The method according to claim 1, wherein granularity of the assistance information comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

5. The method according to claim 1, further comprising:
receiving, by the terminal, configuration information from the network device, wherein the configuration information comprises at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

6. The method according to claim 1, wherein the transmitting, by a terminal, the assistance information to a network device comprises:
transmitting, by the terminal, the assistance information to the network device through at least one of a radio resource control (RRC) message, a medium access control element (MAC CE), uplink control information (UCI), and a non-access stratum (NAS) message.

7. The method according to claim 1, wherein the transmitting, by a terminal, the assistance information to a network device comprises:
transmitting, by the terminal, the assistance information to the network device in a case that a preset condition is satisfied, wherein
the case that a preset condition is satisfied comprises at least one of the following:
a preset period is satisfied;
the terminal receives indication information transmitted by the network device, wherein the indication information is used for indicating any one of the following: the terminal reports the assistance information, the terminal is allowed to report the assistance information, and the terminal reports the assistance information in a case that the assistance information changes;
the assistance information changes; and
a preset timer expires or a preset timer is not in a running state.

8. The method according to claim 7, wherein the case that the assistance information changes comprises at least one of the following:
user QoE changes, or a change in user QoE exceeds a first preset threshold;
a user satisfied rate changes, or a change in a user satisfied rate exceeds a second preset threshold;
the data rate changes, or a change in the data rate exceeds a third preset threshold;
the data error rate changes, or a change in the data error rate exceeds a fourth preset threshold;
the packet loss information changes, or a change in the packet loss information exceeds a fifth preset threshold;
the delay statistic information of the data packet changes, or a change in the delay statistic information of the data packet exceeds a sixth preset threshold;
the congestion information changes, or a change in the congestion information exceeds a seventh preset threshold;
the buffer occupancy information of the uplink transmission end changes, or a change in the buffer occupancy information of the uplink transmission end exceeds an eighth preset threshold;
the buffer data information of the downlink reception end changes, or a change in the buffer data information of the downlink reception end exceeds a ninth preset threshold; and
the display buffer data information of the terminal changes, or a change in the display buffer data information of the terminal exceeds a tenth preset threshold.

9. The method according to claim 7, wherein granularity of the preset timer comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

10. The method according to claim 1, wherein the transmitting, by a terminal, the assistance information to a network device comprises:
transmitting, by the terminal, the assistance information to an application server, and transmitting, by the application server, the assistance information to the network device.

11. The method according to claim 1 or 7, wherein the transmitting, by a terminal, the assistance information to a network device comprises:
reporting the assistance information by the terminal in a case that the terminal receives a configuration from a network device and the terminal is allowed to report the assistance information;
or,
reporting the assistance information by the terminal if the terminal satisfies the preset condition in a case that the terminal receives a configuration from a network device and the terminal is allowed to report the assistance information.

12. A method for receiving assistance information, comprising:
receiving, by a network device, the assistance information from a terminal; and
executing, by the network device, a processing operation according to the assistance information, wherein
the assistance information comprises at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

13. The method according to claim 12, wherein the processing operation comprises at least one of the following operations:
congestion control;
access control;
adjustment of a scheduling-related configuration; and
adjustment of a transmission-related configuration from a network device.

14. The method according to claim 13, wherein the operations comprise at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

15. The method according to claim 12, wherein granularity of the assistance information comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

16. The method according to claim 12, further comprising:
transmitting, by the network device, configuration information to the terminal, wherein the configuration information comprises at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

17. The method according to claim 12, wherein the receiving, by a network device, assistance information from a terminal comprises:
receiving, by the network device, the assistance information from the terminal through at least one of an RRC message, an MAC CE, UCI, and an NAS message.

18. The method according to claim 12, wherein the receiving, by a network device, assistance information from a terminal comprises:
receiving, by the network device, the assistance information from an application server or a core network device, wherein the assistance information is transmitted by the terminal to the application server or to the core network device.

19. The method according to claim 12, wherein in a case that the network device comprises an access network device, the method further comprises:
transmitting, by the network device, the assistance information to a core network device or an application server.

20. The method according to claim 12, wherein in a case that the network device comprises a core network device, the method further comprises:
transmitting, by the network device, the assistance information to an access network device or an application server.

21. The method according to claim 20, wherein the assistance information is used for the application server to adjust an encoding rate based on the assistance information.

22. An apparatus for transmitting assistance information, applied to a terminal, comprising:
a first transmission module configured to transmit, by the terminal, the assistance information to a network device, wherein the assistance information comprises at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

23. The apparatus according to claim 22, wherein the assistance information is used for at least one of the following operations:
congestion control;
access control;
adjustment of a scheduling-related configuration; and
adjustment of a transmission-related configuration from a network device.

24. The apparatus according to claim 23, wherein the operations comprise at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

25. The apparatus according to claim 22, wherein granularity of the assistance information comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

26. The apparatus according to claim 22, further comprising:
a first reception module configured to receive, by the terminal, configuration information from the network device, wherein the configuration information comprises at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

27. The apparatus according to claim 22, wherein the first transmission module is configured to:
transmit, by the terminal, the assistance information to the network device through at least one of a radio resource control (RRC) message, a medium access control element (MAC CE), uplink control information (UCI), and a non-access stratum (NAS) message.

28. The apparatus according to claim 22, wherein the first transmission module is configured to:
transmit, by the terminal, the assistance information to the network device in a case that a preset condition is satisfied, wherein
the case that a preset condition is satisfied comprises at least one of the following:
a preset period is satisfied;
the terminal receives indication information transmitted by the network device, wherein the indication information is used for indicating any one of the following: the terminal reports the assistance information, the terminal is allowed to report the assistance information, and the terminal reports the assistance information in a case that the assistance information changes;
the assistance information changes; and
a preset timer expires or a preset timer is not in a running state.

29. The apparatus according to claim 28, wherein the case that the assistance information changes comprises at least one of the following:
user QoE changes, or a change in user QoE exceeds a first preset threshold;
a user satisfied rate changes, or a change in a user satisfied rate exceeds a second preset threshold;
the data rate changes, or a change in the data rate exceeds a third preset threshold;
the data error rate changes, or a change in the data error rate exceeds a fourth preset threshold;
the packet loss information changes, or a change in the packet loss information exceeds a fifth preset threshold;
the delay statistic information of the data packet changes, or a change in the delay statistic information of the data packet exceeds a sixth preset threshold;
the congestion information changes, or a change in the congestion information exceeds a seventh preset threshold;
the buffer occupancy information of the uplink transmission end changes, or a change in the buffer occupancy information of the uplink transmission end exceeds an eighth preset threshold;
the buffer data information of the downlink reception end changes, or a change in the buffer data information of the downlink reception end exceeds a ninth preset threshold; and
the display buffer data information of the terminal changes, or a change in the display buffer data information of the terminal exceeds a tenth preset threshold.

30. The apparatus according to claim 28, wherein granularity of the preset timer comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

31. The apparatus according to claim 22, wherein the first transmission module is configured to:
transmit, by the terminal, the assistance information to an application server, wherein the assistance information is transmitted by the application server to the network device.

32. The apparatus according to claim 22 or 28, wherein the first transmission module is configured to:
report the assistance information by the terminal in a case that the terminal receives a configuration from a network device and the terminal is allowed to report the assistance information;
or,
report the assistance information by the terminal if the terminal satisfies the preset condition in a case that the terminal receives a configuration from a network device and the terminal is allowed to report the assistance information.

33. An apparatus for receiving assistance information, applied to a network device, comprising:
a second reception module configured to receive, by the network device, assistance information from a terminal; and
a processing module configured to execute, by the network device, a processing operation according to the assistance information, wherein
the assistance information comprises at least one of the following:
user QoE information;
user satisfied rate information;
a data rate;
a data error rate;
packet loss information;
delay statistic information of a data packet;
congestion information;
buffer occupancy information of an uplink transmission end;
buffer data information of a downlink reception end; and
display buffer data information of the terminal.

34. The apparatus according to claim 33, wherein the processing operation comprises at least one of the following operations:
congestion control;
access control;
adjustment of a scheduling-related configuration; and
adjustment of a transmission-related configuration from a network device.

35. The apparatus according to claim 34, wherein the operations comprise at least one of the following:
a Per-UE operation;
a Per-IP flow operation;
a Per-QoS flow operation;
a Per-DRB operation;
a Per-LCH operation;
a Per-PDU set operation;
a Per-PDU operation;
a Per-frame operation;
a Per-slice operation; and
a Per-packet operation.

36. The apparatus according to claim 33, wherein granularity of the assistance information comprises at least one of the following:
Per-UE granularity;
Per-IP flow granularity;
Per-QoS flow granularity;
Per-DRB granularity;
Per-LCH granularity;
Per-PDU set granularity;
Per-PDU granularity;
Per-frame granularity;
Per-slice granularity; and
Per-packet granularity.

37. The apparatus according to claim 33, further comprising:
a second transmission module configured to transmit, by the network device, configuration information to the terminal, wherein the configuration information comprises at least one of the following:
reporting granularity information used for indicating at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity; and
granularity identity information used for indicating identity information of at least one of Per-IP flow granularity, Per-QoS flow granularity, Per-DRB granularity, Per-LCH granularity, Per-PDU set granularity, Per-PDU granularity, Per-frame granularity, Per-slice granularity, and Per-packet granularity.

38. The apparatus according to claim 33, wherein the second reception module is configured to:
receive, by the network device, the assistance information from the terminal through at least one of an RRC message, an MAC CE, UCI, and an NAS message.

39. The apparatus according to claim 33, wherein the second reception module is configured to:
receive, by the network device, the assistance information from an application server or a core network device, wherein the assistance information is transmitted by the terminal to the application server or to the core network device.

40. The apparatus according to claim 33, wherein in a case that the network device comprises an access network device, the apparatus further comprises:
a third transmission module configured to transmit, by the network device, the assistance information to a core network device or an application server.

41. The apparatus according to claim 33, wherein in a case that the network device comprises a core network device, the apparatus further comprises:
a fourth transmission module configured to transmit, by the network device, the assistance information to an access network device or an application server.

42. The apparatus according to claim 41, wherein the assistance information is used for the application server to adjust an encoding rate based on the assistance information.

43. A terminal, comprising a processor and a memory, wherein the memory stores a program or an instruction runnable on the processor, and when the program or the instruction is executed by the processor, steps of the method for transmitting assistance information according to any one of claims 1 to 11 are implemented.

44. A network device, comprising a processor and a memory, wherein the memory stores a program or an instruction runnable on the processor, and when the program or the instruction is executed by the processor, steps of the method for receiving assistance information according to any one of claims 12 to 21 are implemented.

45. A readable storage medium, storing a program or an instruction, wherein when the program or the instruction is executed by a processor, steps of the method for transmitting assistance information according to any one of claims 1 to 11 are implemented, or steps of the method for receiving assistance information according to any one of claims 12 to 21 are implemented.
